(19)

Europäisches Patentamt

European Patent Office

Office européen des brevets

(11) **EP 1 987 307 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(21) Anmeldenummer: **07711659.8**

(22) Anmeldetag: **23.02.2007**

(51) Int Cl.:
*F28D 19/04* (2006.01)

(86) Internationale Anmeldenummer:
**PCT/EP2007/001599**

(87) Internationale Veröffentlichungsnummer:
**WO 2007/096189 (30.08.2007 Gazette 2007/35)**

(54) **VERFAHREN ZUM OPTIMIERTEN BETRIEB EINES LUFTVORWÄRMERS UND LUFTVORWÄRMER**

METHOD FOR OPTIMISED OPERATION OF AN AIR PREHEATER AND AIR PREHEATER

PROCÉDÉ POUR LE FONCTIONNEMENT OPTIMISÉ D'UN RÉCHAUFFEUR D'AIR ET RÉCHAUFFEUR D'AIR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.02.2006 DE 102006008847**

(43) Veröffentlichungstag der Anmeldung:
**05.11.2008 Patentblatt 2008/45**

(73) Patentinhaber: **Alstom Technology Ltd**
**5400 Baden (CH)**

(72) Erfinder:
• **GIETZ, Manfred**
**70619 Stuttgart (DE)**
• **SCHÜLE, Volker**
**69181 Leimen (DE)**
• **FALLER, Berthold**
**69121 Heidelberg (DE)**

(74) Vertreter: **Hellwig, Tillmann Johannes**
**Dreiss Patentanwälte**
**Postfach 10 37 62**
**70032 Stuttgart (DE)**

(56) Entgegenhaltungen:
**US-A- 2 320 911    US-A- 2 499 358**
**US-A- 2 570 859**

**Beschreibung**

Regenerative Luftvorwärmer sind seit Jahrzehnten bekannt und haben sich in der Praxis bewährt. Besonders vorteilhaft ist der so genannte Ljungström-Luftvorwärmer mit einem Rotor, der eine oder mehrere Lagen von Heizblechen aufweist. Bei Luftvorwärmern strömt die aufzuwärmende Luft üblicherweise im Gegenstrom zu den abzukühlenden Rauchgasen durch ein Gehäuse mit mindestens einem Lufteintritt, mindestens einem Luftaustritt, mindestens einem Rauchgaseintritt und mindestens einem Rauchgasaustritt. Der Wärmetransport vom Rauchgas auf die Luft erfolgt über die Heizbleche des Rotors. Die Erfindung ist nicht auf bestimmte Bauarten von regenerativer Luftvorwärmer beschränkt, sondern kann beispielsweise auch bei Bisektor-, Trisektor- und konzentrischen Luftvorwärmern mit mehreren Lufteintritten und -austritten sowie mehreren Rauchgaseintritten und -austritten erfolgreich eingesetzt werden. Exemplarisch sei dabei auf die US 2320911 verwiesen. Diese Schrift zeigt ein verfahren nach dem Oberbegriff des Anspruchs 1.

Naturgemäß schwenkt die Temperatur der Heizbleche bei sonst gleichen Betriebsbedingungen mit jeder Umdrehung des Rotors. Solange die Heizbleche vom heißen Rauchgas umströmt werden, nimmt die Temperatur zu. Im Anschluss daran werden die Heizbleche von der kühleren Luft umströmt und geben Wärme an die Luft ab. Dadurch sinkt die Temperatur der Heizbleche wieder.

Somit ist der Temperaturverlauf eines Punktes der Heizbleche mit einem Sägezahnprofil oder einer Wellenlinie vergleichbar. Die Frequenz dieser Wellenlinie hängt von der Drehgeschwindigkeit des Rotors ab. Die Amplitude dieser Wellenlinie hängt von der Rotordrehzahl, der Eintrittstemperatur und Massenstrom des Rauchgases sowie der Eintrittstemperatur und Massenstrom der Luft ab.

Selbstverständlich haben auch die Eigenschaften der Heizbleche, wie Wärmeübergangskoeffizient, Wärmespeicherkapazität Einfluss auf die Amplitude der Temperaturschwankungen.

Der Ort innerhalb des Rotors hat einen wesentlichen Einfluss auf Lage und Amplitude der wellenförmigen Temperaturschwankungen. An einem Rotorende, dem Eintritt des Rauchgases bzw. Austritt der Luft, auch heiße Seite genannt, befindet sich die höchste Heizblechtemperatur. Am anderen Ende, dem Austritt des Rauchgases bzw. Eintritt der Luft, auch kalte Seite genannt, tritt die niedrigste Heizblechtemperatur auf. Da am kalten Ende zwischen Luft und Rauchgas die größere Temperaturdifferenz herrscht, ist dort die Temperaturamplitude am größten.

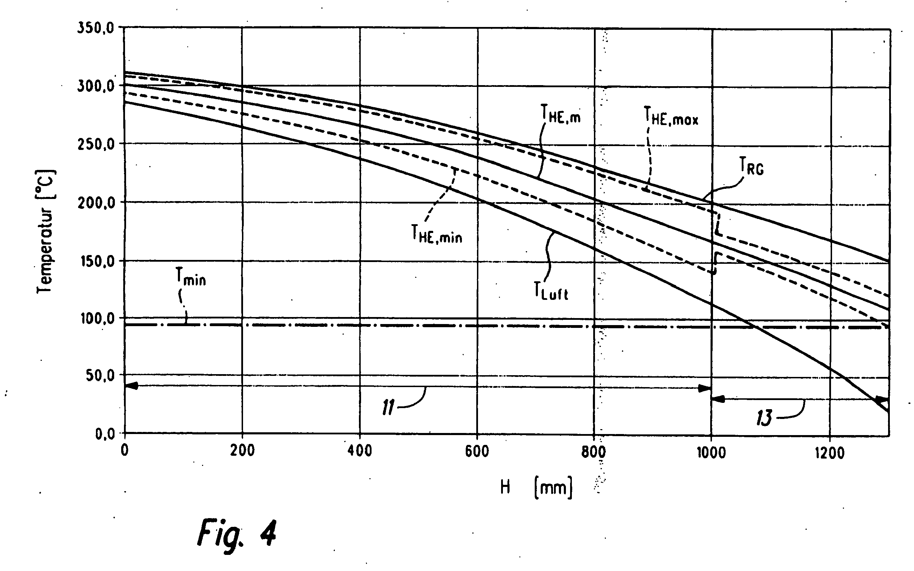

Dieser Zusammenhang ist aus Figur 4 ersichtlich.

Um zu verhindern, dass Bestandteile der Rauchgase an den Heizblechen kondensieren oder sich anlagern, sollte ein Luftvorwärmer stets so betrieben werden, dass an keinem Punkt des Rotors Kondensation der Rauchgase auftritt. Dies bedeutet, dass die Heizbleche zu keinem Zeitpunkt und an keinem Ort des Rotors eine Mindesttemperatur $T_{min}$, die unter anderem vom Wasser-, $SO_3$- und Staubgehalt der Rauchgase abhängt, unterschreiten.

Um dies zu gewährleisten, wird bei Luftvorwärmern heutzutage die Eintrittstemperatur der Luft mittels Dampfluvo oder Heißluftrezirkulation oft stärker angehoben als unbedingt erforderlich ist und/oder der Massenstrom der durch den Luftvorwärmer strömenden Luft kleiner als nötig gehalten (mit Luft-Bypass). Dadurch wird die Leistungsfähigkeit des Luftvorwärmers nicht voll ausgeschöpft, was sich negativ auf den Gesamtwirkungsgrad des Kraftwerks auswirkt und infolgedessen die Wirtschaftlichkeit des Kraftwerks verringert.

Der Erfindung liegt die Aufgabe zugrunde, ein Verfahren zum Betreiben eines Luftvorwärmers bereitzustellen, mit dessen Hilfe einerseits gewährleistet werden kann, dass die Mindesttemperatur der Heizbleche in allen Betriebszuständen und an allen Orten des Rotors nicht unterschritten wird und gleichzeitig die maximal mögliche Wärmeübertragung vom Rauchgas auf die Luft erreicht wird.

Diese Aufgabe wird erfindungsgemäß durch ein Verfahren zum Betreiben eines regenerativen Luftvorwärmers, mit einem Rotor, mit mindestens einem Rauchgaseintritt, mit mindestens einem Rauchgasaustritt, mit mindestens einem Lufteintritt und mit mindestens einem Luftaustritt, nach Anspruch 1 gelöst

Wenn zum Beispiel bei einem Bisektor-Luftvorwärmer ein Lufteintritt und ein Rauchsgaseintritt vorhanden sind, reicht es aus, wenn insgesamt zwei Eintrittstemperaturen und zwei Massenströme erfasst werden.

Dadurch ist es möglich, einerseits die Korrosion der Heizbleche aufgrund von kondensierten Rauchgasbestandteilen und das Ablagern von festen Rauchgasbestandteilen auf den Heizblechen sicher zu verhindern und gleichzeitig die Wärmeübertragung vom Rauchgas auf die Luft zu optimieren.

Da das erfindungsgemäße Verfahren in Abhängigkeit der wichtigsten Parameter arbeitet, können auch wechselnde Betriebsbedingungen mit dem erfindungsgemäßen Verfahren berücksichtigt werden und somit der Luftvorwärmer stets im optimalen Betriebspunkt gehalten werden.

Da das erfindungsgemäße Verfahren lediglich die Kenntnis von Temperaturen und Massenströmen, die in der Kraftwerkssteuerung normalerweise ohnehin vorhanden sind und die Steuerung meist schon vorhandener Klappen erfordert, sind die Kosten für die Durchführung des erfindungsgemäßen Verfahrens relativ gering und werden durch die Einsparungen bei den Brennstoffkosten des Kraftwerks in kürzester Zeit amortisiert.

Des Weiteren ist es möglich, das erfindungsgemäße Verfahren auch bei bereits in Betrieb befindlichen Luftvorwärmern anzuwenden, so dass auch hier die erfindungsgemäßen Effizienzsteigerungen des Kraftwerkwerks realisierbar sind.

Der Betrieb des nach dem erfindungsgemäßen arbeitenden Luftvorwärmers kann noch weiter verbessert werden, indem auch die Temperatur des Rauchgases am Rauchgasaustritt und der Luft am Luftaustritt erfasst wird.

Bei Rotoren mit mehreren Lagen von Heizblechen wird Vorteilhafterweise am Übergang zwischen jeweils zwei Heizblechlagen die Minimaltemperatur der Heizbleche ermittelt, da auch dort lokale Minima der Heizblechtemperaturen auftreten können.

Es hat sich als effektiv und vorteilhaft erwiesen, wenn im Bedarfsfall die Eintrittstemperatur der Luft durch Vorwärmen mittels eines Dampfluvos oder Rückführen bereits vorgewärmter Luft vom Luftaustritt zum Lufteintritt angehoben wird. Des Weiteren ist es vorteilhaft, wenn bei Bedarf ein Teilstrom der vorzuwärmenden Luft im Bypass an dem Luftvorwärmer vorbeigeführt wird. Beides führt dazu, dass die im Betrieb auftretenden Minimaltemperaturen an den Heizblechen ansteigen und somit die kritische Mindesttemperatur nicht unterschritten wird. Da diese Maßnahmen zudem sehr einfach durchführbar sind und der dazu erforderliche apparative Aufbau überschaubar ist, sind diese Maßnahmen besonders geeignet, zur Steuerung eines nach dem erfindungsgemäßen Verfahren betriebenen Luftvorwärmers.

Die der Erfindung zugrunde liegende Aufgabe wird auch durch ein Computerprogramm, das zur Durchführung der genannten Verfahren geeignet ist.

Die eingangs genannte Aufgabe wird ebenfalls bei einem Luftvorwärmer mit Einrichtungen zum Erfassen von Temperatur und Massenstrom der Luft am Lufteintritt sowie von Temperatur und Massenstrom des Rauchgases am Rauchgaseintritt dadurch gelöst, dass er ein Steuergerät aufweist, und dass das Steuergerät nach einem der Verfahren nach den Ansprüchen 1 bis 3 arbeitet.

Eine verbesserte Variante eines erfindungsgemäßen Luftvorwärmers sieht vor, dass er Einrichtungen zum Erfassen von Temperatur- und/oder Massenstrom der Luft am Luftaustritt und/oder zum Erfassen am Rauchgasaustritt aufweist.

In der Zeichnung zeigen:

Figur 1    eine schematische Darstellung eines regenerativen Luftvorwärmers im Schnitt,

Figur 2    eine Draufsicht auf einen Rotor eines regenerativen Luftvorwärmers,

Figur 3    den zeitlichen Verlauf der Temperaturen eines Heizblechs,

Figur 4    die wichtigsten, im Betrieb des Luftvorwärmers auftretenden Temperaturen in Abhängigkeit von der Heizblechhöhe des Rotors, und

Figur 5    ein Schaltbild zweier nach dem erfindungsgemäßen Verfahren arbeitenden regenerativen Luftvorwärmer mit Heißluftrückführung und Kaltluftbypass.

Beschreibung der Ausführungsbeispiele

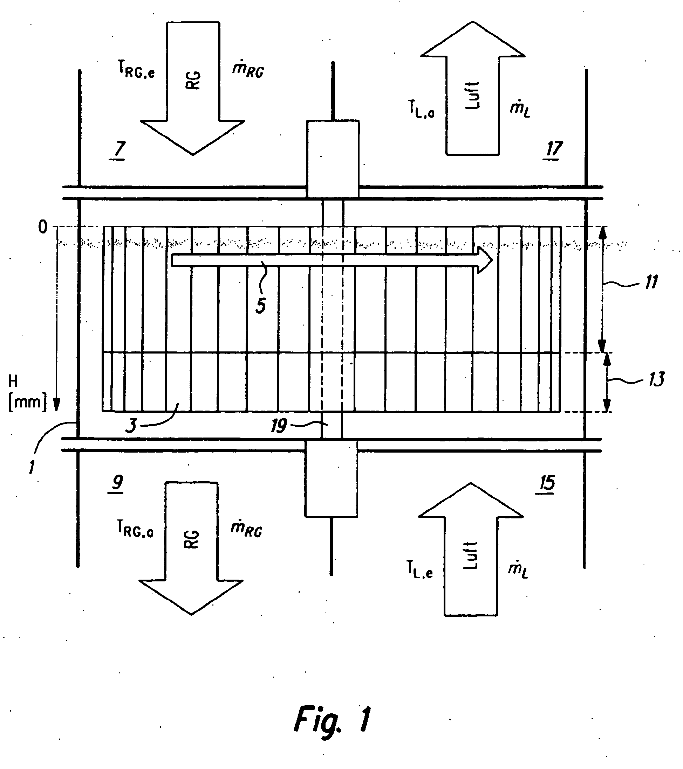

In Figur 1 ist ein regenerativer Luftvorwärmer in einer Seitenansicht mit einem geschnitten dargestellten Gehäuse 1 dargestellt. In dem Gehäuse 1 ist ein Rotor 3 drehbar gelagert. Der Rotor 3 kann über nicht dargestellte Antriebe in Drehung versetzt werden. Die Drehung des Rotors 3 ist in Figur 1 durch einen Pfeil 5 angedeutet.

Die linke Hälfte des Gehäuses 1 wird von Rauchgas (RG) in Richtung der Pfeile durchströmt. Das Rauchgas tritt an einem Rauchgaseintritt 7 in den Luftvorwärmer ein und verlässt diesen an einem Rauchgasaustritt 9. Auf dem Weg vom Rauchgaseintritt 7 zum Rauchgasaustritt 9 durchströmt das Rauchgas den im linken Teil des Gehäuses 1 befindlichen Teil des Rotors 3.

Der Rotor 3 weist bei dem in Figur 1 dargestellten Ausführungsbeispiel 2 Lagen von Heizblechen auf. Im oberen Teil des Rotors 3 ist die so genannte heiße Lage 11 angeordnet. In dem darunter liegenden Teil ist die so genannte kalte Lage 13 angeordnet.

Die heiße Lage 11 und die kalte Lage 13 unterscheiden sich bezüglich ihres Materials, ihrer Oberflächenbeschichtung und Geometrie und sind optimal an die jeweils herrschenden Bedingungen angepasst.

Auf der in Figur 1 rechten Seite des Luftvorwärmers sind ein Lufteintritt 15 und ein Luftaustritt 17 angeordnet. Die Strömungsrichtung der Luft, die am Lufteintritt 15 in den Luftvorwärmer eintritt und ihn am Luftaustritt 17 verlässt, ist der Strömungsrichtung des Rauchgases entgegengesetzt.

Wenn die Rauchgase durch den im linken Teil von Figur 1 befindlichen Teil des Rotors 3 strömen, geben sie Wärme an die Heizbleche des Rotors 3 ab und erwärmen die heiße Lage 11 und die kalte Lage 13 der Heizbleche. Gleichzeitig kühlen sich die Rauchgase ab. Dies bedeutet, dass eine Eintrittstemperatur $T_{RG,e}$ des Rauchgases am Rauchgaseintritt 7 höher als eine Austrittstemperatur $T_{RG,a}$ des Rauchgases am Rauchgasaustritt 9 ist.

Wenn sich die solcherart aufgeheizten Heizbleche durch Drehung des Rotors von dem in Figur 1 linken Teil des Luftvorwärmers in den rechten Teil des Luftvorwärmers bewegen, erwärmen sie die kalte Luft und kühlen sich ab. Dies bedeutet, dass eine Eintrittstemperatur $T_{L,e}$ der Luft am Lufteintritt 15 niedriger ist als eine Austrittstemperatur $T_{L,a}$ der Luft am Luftaustritt 17.

Im Ergebnis wird mit Hilfe des Luftvorwärmers ein Teil der im Rauchgas befindlichen sensiblen Wärme auf die Luft übertragen.

Um eine Vermischung von Rauchgas und Luft zu verhindern, sind zwischen dem linken Teil des Gehäuses 1 und dem rechten Teil des Gehäuses 1 Axial- und Radialabdichtplatten 19 vorgesehen.

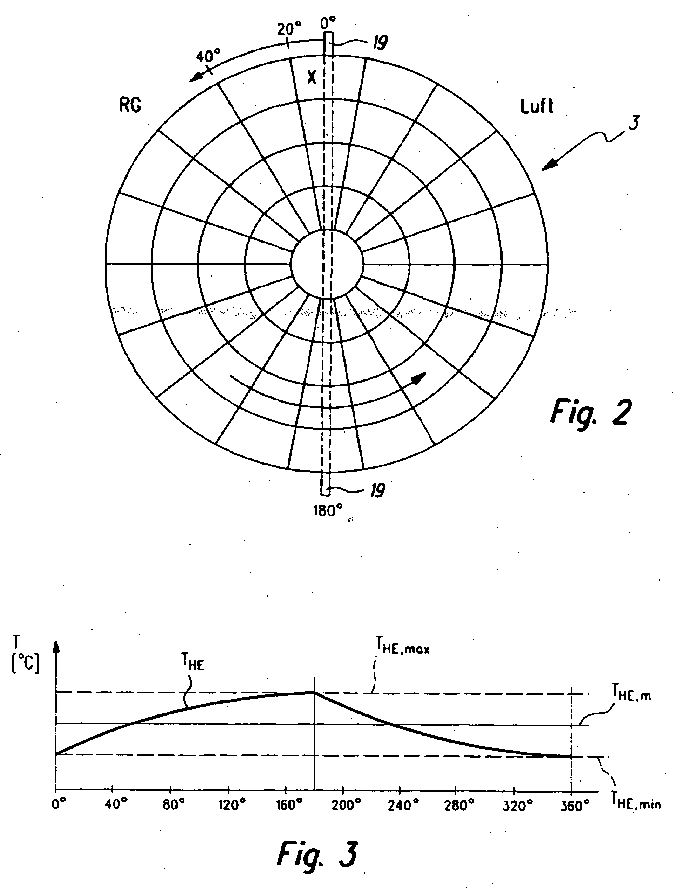

In Figur 2 ist eine Draufsicht auf den Rotor 3 aus Figur 1 und schematisch die Radialabdichtplatte 19 dargestellt. Aus dieser Draufsicht ergibt sich, dass der Rotor 3 aus verschiedenen Sektoren mit Trennwänden (Tangentialwänden) zusammengesetzt ist (ohne Bezugszeichen). In diese Segmente werden die Heizbleche in Behältern (nicht dargestellt) gepackt. Wenn sich nun zum Beispiel das mit einem "X" gekennzeichnete Heizblech beginnend nach der Radialabdichtung in den linken Teil des Luftvorwärmers hineindreht, wird es von dem dort vorhandenen Rauchgasstrom umströmt und erwärmt. Dieser Prozess setzt sich fort, bis zum Ende des Gassektors. Dann nämlich verlässt das Segment X den linken Teils des Luftvorwärmers, dreht sich unter der Abdichtung 19 hindurch und tritt in den rechten Teil des Luftvorwärmers ein. Dort wird das nunmehr erhitzte Heizblech von der kühlen Luft umströmt und gibt dabei Wärme an die Luft ab. Dieser Vorgang dauert an, bis das Ende des Luftsektors erreicht ist.

In Figur 3 ist qualitativ der Temperaturverlauf an einer Stelle des Heizbleches über dem Drehwinkel des Rotors aufgetragen. Bei einem Drehwinkel von ca. 180˚ verlässt das Heizblech den von Rauchgas durchströmten Teil und tritt in den von kühler Luft durchströmten Teils des Luftvorwärmers ein.

Die Temperatur des Heizblechs ist in Figur 3 mit $T_{He}$ gekennzeichnet. Wie aus Figur 3 ersichtlich, wechselt die Temperatur $T_{He}$ des Heizblechs zwischen zwei Grenztemperaturen, nämlich einer Maximaltemperatur $T_{He,max}$ und einer Minimaltemperatur $T_{He,min}$, hin und her. Der zeitliche Mittelwert der Temperatur $T_{He}$ des Heizblechs ist in Figur 3 mit $T_{He,m}$ gekennzeichnet.

Die Maximaltemperatur $T_{He,max}$ erreicht das Heizblech bei einem Drehwinkel von ca. 180˚, während es seine Minimaltemperatur nach einem Drehwinkel von ca. 0˚ bzw. 360˚ erreicht.

Es versteht sich von selbst, dass die tatsächlichen Werte der Maximaltemperatur $T_{He,max}$ und der Minimaltemperatur $T_{He,min}$ unter anderem von der Auslegung und dem Betriebspunkt des Luftvorwärmers abhängen. So sind beispielsweise folgende Parameter für die Temperatur $T_{He}$ des Heizblechs von Bedeutung: Der Massenstrom $\dot{m}_{RG}$ und die Temperatur $T_{RG,e}$ des Rauchgases am Rauchgaseintritt 7 sowie die Eintrittstemperatur $T_{L,e}$ und der Massenstrom $\dot{m}_{Luft}$ der Luft am Lufteintritt 15. Insbesondere kann durch Ändern einer der genannten Größen, beispielsweise durch Anheben der Lufteintrittstemperatur $T_{L,e}$ die minimale Temperatur der Heizelemente $T_{He,min}$ angehoben werden.

Um eine Verschmutzung des Luftvorwärmers und den daraus resultierenden Druckverlust sowie einen daraus resultierenden Ausfall des Kraftwerkblocks zu verhindern, muss ein Luftvorwärmer so betrieben werden, dass rauchgasseitig eine Mindesttemperatur $T_{min}$ der Heizelemente insbesondere an der kalten Lage der Heizbleche, nicht für längere Zeit unterschritten wird.

Die Mindesttemperatur $T_{min}$ wird unter anderem durch die Rauchgaszusammensetzung bestimmt. Dabei sind insbesondere die Wasser-, $SO_3$- und der Staubgehalt sowie die Aschezusammensetzung und hier insbesondere der Ca- und Mg-Gehalt von Bedeutung. Die Mindesttemperatur $T_{min}$ kann mit Kenntnis der Rauchgaszusammensetzung berechnet werden.

Um trotz etwaiger Schwankungen von Einflussgrößen, wie beispielsweise der Rauchgaseintrittstemperatur $T_{RG,e}$, des Massenstrom $\dot{m}_{RG}$ des Rauchgases, der Lufteintrittstemperatur

$T_{L,e}$ und des Massenstroms $\dot{m}_{Luft}$ der Luft einen sicheren Betrieb des Luftvorwärmers zu gewährleisten, wird üblicherweise der Luftvorwärmer so betrieben, dass die Minimaltemperatur $T_{He,min}$ der Heizbleche deutlich höher ist als die oben genannte Mindesttemperatur, bei der das Rauchgas kondensiert oder feste Bestandteile des Rauchgases an den Heizblechen anhaften.

Je größer der "Sicherheitsabstand" zwischen der tatsächlich am Heizblech auftretenden Minimaltemperatur $T_{He,min}$ und der Mindesttemperatur $T_{min}$ ist, desto mehr Wärme geht ungenutzt im Rauchgas verloren. Im Ergebnis führt dies zu einer Verringerung des Wirkungsgrads des Kraftwerksblocks und damit zu erhöhten Emissionen und Brennstoffkosten.

In Figur 4 sind wesentliche und charakteristische Temperaturen, die beim Betrieb des Luftvorwärmers auftreten, über der Heizblechhöhe H aufgetragen.

Die Heizblechhöhe H ist auch in Figur 1 aufgetragen. Ihr Ursprung beginnt am oberen Rand des Rotors 3 dort, wo das heiße Rauchgas zum ersten Mal auf den Rotor 3 auftritt.

In Figur 4 ist die Heizblechhöhe auf der X-Achse aufgetragen und, wie auch bei dem Rotor gemäß Figur 1, in eine heiße Lage 11 und eine kalte Lage 13 unterteilt. Die oberste Linie in dem Diagramm gemäß Figur 4 ist die Rauchgastemperatur $T_{RG}$, während die niedrigste Temperatur die Temperatur $T_{Luft}$ der Luft ist. Es versteht sich von selbst, dass sowohl die Rauchgastemperatur $T_{RG}$ als auch die Lufttemperatur $T_{Luft}$ sich beim Durchströmen des Rotors 3 ändern. Zwischen der oberen Grenze $T_{RG}$ und der unteren Grenze $T_{Luft}$ liegen die Temperaturen der Heizbleche. Dies lässt sich anhand der mittleren Heizblechtemperatur $T_{HE,m}$ in Figur 4 gut erkennen.

In Figur 4 sind auch die Maximaltemperaturen $T_{HE,max}$ und $T_{HE,min}$ der Heizbleche eingezeichnet. Zwischen diesen Temperaturen bewegt sich die tatsächliche Temperatur eines Heizblechs des Rotors 3 während des Betriebs hin und her.

In Figur 4 ist eine Mindesttemperatur $T_{min}$, die beispielsweise bei etwas weniger als etwa 100 ° C liegt, eingetragen. Diese Temperatur darf kein Teil des Rotors 3 zu irgendeinem Zeitpunkt unterschreiten. Höhere Temperaturen sind unkritisch und bedürfen daher keiner besonderen Aufmerksamkeit.

Von besonderer Bedeutung für den störungsfreien Betrieb des Luftvorwärmers ist der Verlauf Minimaltemperatur $T_{HE,min}$. der Heizbleche. Beginnend bei einer Heizblechhöhe H = 0 mm liegt die Temperatur $T_{HE,min}$ bei nahezu 300 ° Celsius und damit deutlich höher als die Mindesttemperatur $T_{min}$.

Mit zunehmender Heizblechhöhe H sinkt die Temperatur $T_{HE,min}$. Eine Unstetigkeit ergibt sich beim Übergang von der heißen Lage 11 auf die kalte Lage 13, was durch die geänderten Wärmeübertragungseigenschaften der beiden Lagen 11 und 13 zu erklären ist.

Da die Wärmespeicherkapazität der kalten Lage 13 höher ist als diejenige der heißen Lage 11, steigt die Mindesttemperatur $T_{min}$ beim Übergang auf die heiße Lage 11 auf die kalte Lage 13 wieder an, um dann erneut abzusinken. Bei H = 1.250 mm, das heißt an dem in Figur 1 unteren Ende des Rotors 3, schneiden sich die Temperaturen $T_{HE,min}$ und $T_{min}$. Dies bedeutet, dass der Luftvorwärmer optimal betrieben wird. Einerseits wird nämlich so viel Wärme von dem Rauchgas auf die Luft übertragen wie möglich und gleichzeitig wird an keinem Ort und zu keinem Zeitpunkt die Mindesttemperatur $T_{min}$ von den Heizblechen unterschritten.

Sowohl der Verlauf der Temperaturen $T_{HE,max}$, $T_{HE,m}$ und $T_{HE,min}$ als auch die Minimaltemperatur $T_{min}$ hängen von den Betriebsbedingungen des Luftvorwärmers ab.

Die Ermittlung der tatsächlich an den Heizblechen auftretenden Temperaturen, insbesondere der Minimaltemperatur $T_{HE,min}$ in Abhängigkeit vom Ort und den Betriebsgrößen $T_{RG}$, $\dot{m}_{RG}$, $T_{Luft}$ und $\dot{m}_{Luft}$ kann beispielsweise durch Messungen der Heizblechtemperatur im Bereich der maximalen Heizblechhöhe H und an jedem Übergang von einer Lage 11 auf eine andere Lage 13 erfolgen. Dieses Verfahren ist jedoch für den Dauerbetrieb nicht geeignet, da die dort auftretenden hohen Temperaturen sowie der Aschegehalt der Rauchgase und deren korrosive Anteile die Lebensdauer einer solchen Messtechnik stark: begrenzen.

Zur Steuerung des Luftvorwärmers können eine oder mehrere der forlgenden Parameter benutzt werden: Es kann der Anteil der angesaugten Innenluft und der angesaugten Außenluft variiert werden. Durch eine Erhöhung des Anteils der Innenluft steigt die Temperatur $T_{Luft,e}$ am Lufteintritt 15.

Des Weiteren ist es möglich, die Lufteintrittstemperatur zu erhöhen, indem dem eigentlichen Luftvorwärmer ein mit Dampf gespeister Dampfluftvorwärmer vorgeschaltet wird.

Des Weiteren kann die Temperatur $T_{Luft,e}$ am Lufteintritt 15 erhöht werden, indem ein Teil der bereits vorgewärmten Luft vom Luftaustritt 17 wieder zum Lufteintritt 15 zurückgeführt wird (sog. Heißluftrückführung).

Des Weiteren kann ein Teil der Luft am Lufteintritt abgezweigt werden und im Bypass an dem Luftvorwärmer vorbeigeführt werden (sog. Luft-Bypass).

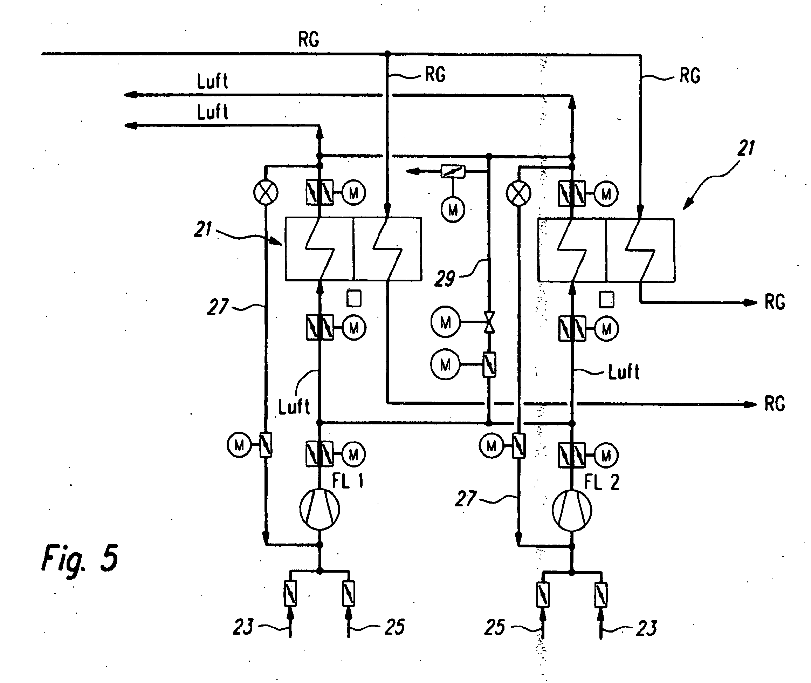

In Figur 5 ist ein Blockschaltbild von zwei nach dem erfindungsgemäßen Verfahren arbeitenden Luftvorwärmern 21 dargestellt. Da in dem Blockschaltbild die üblichen Symbole für Bauelemente von Kraftwerken verwendet werden, wird auf eine detaillierte Beschreibung aller Symbole und Bauelemente verzichtet. Es werden nachfolgend nur die wichtigsten Baugruppen und Leitungen, die für die Erfindung von besonderer Bedeutung sind, erläutert.

Die Luftvorwärmer 21 werden von einem nicht dargestellten Kessel mit Rauchgas RG versorgt. Das Rauchgas RG gelangt nach dem Verlassen der Luftvorwärmer 21 in die Rauchgasreinigungsanlage (nicht dargestellt).

Im Gegenstrom zu dem Rauchgas RG werden die Luftvorwärmer 21 von Luft durchströmt. Die durch die Luftvorwärmer 21 vorgewärmte Luft wird dann dem nicht dargestellten Kessel zugeführt oder zur Kohletrocknunqeingesetzt.

Die den Luftvorwärmern 21 zugeführte Luft kann von einer Außenluftansaugung 23 oder einer Innenluftansaugung 25, mit der Luft aus dem Kesselhaus angesaugt wird, stammen.

Da die Außenluft und die Innenluft verschiedene Temperaturen haben, kann durch die Wahl des Mischungsverhältnisses zwischen Innenluft und Außenluft die Temperatur der Luft am Eintritt in die Luftvorwärmer 21 in Grenzen gesteuert werden.

Eine weitere Möglichkeit der Anhebung der Lufttemperatur am Lufteintritt des Luftvorwärmers 21 besteht darin, einen Teil der vorgewärmten Luft am Luftaustritt 17 abzuzweigen und in den Lufteintritt 15 zurückzuführen. Die dazu erforderliche Leitung ist als Heißluftrückführung 27 gekennzeichnet. Eine weitere Möglichkeit, die Betriebsparameter der Luftvorwärmer 21 zu beeinflussen, besteht darin, einen Teil der Luft vor dem Lufteintritt 15 abzuzweigen und im Bypass an den Luftvorwärmern 21 vorbeizuführen. Dieser Bypass ist in Figur 5 mit dem Bezugszeichen 29 versehen.

Aus dem in Figur 5 dargestellten Blockschaltbild ergibt sich, dass eine Vielzahl von Möglichkeiten zur Anhebung der Lufteintrittstemperatur $T_{Luft,e}$ und zur Verringerung des Massenstroms $\dot{m}_{Luft}$ durch die Luftvorwärmer 21 besteht. Deshalb ist es mit Hilfe des erfindungsgemäßen Verfahrens stets möglich, die Luftvorwärmer 21 so zu betreiben, dass einerseits ein Maximum der Wärmeübertragung erreicht wird und andererseits die Temperatur $T_{HE}$ der Heizbleche die Mindesttemperatur $T_{min}$ nicht unterschreitet.

Näherungsformel für die Ermittlung der mittleren Heizblechtemperatur $T_{HB-KSm}$ auf der kalten Seite des Luftvorwärmers

$$T_{HB-KSm} = (T_{Luft,e} + f*(T_{RG,e} + \Delta T_{Le})) / (1+f)$$

wobei
$T_{Luft,e} = 37°C$
$T_{RG, aus} = 184°C$

$$f = f\alpha * fg$$

mit
f: Faktor zur Wärmeübertragung und Aufteilung der Gas- und Luftseite des Luvo

Beispielrechnung:

Wenn man folgende Werte zu Grunde legt,
$\Delta T_{Le} = 8\ K$
$f\alpha = 1,37$
$fg = 1,44$
$f = 1,97$
ergibt sich die minimale Heizblechtemperatur auf der kalten Seite

$$T_{HB-KSm} = (T_{Luft,e} + 1,97*(T_{RG,e} + 8K)) / (2,97)$$
$$= 140°C$$

**Patentansprüche**

1. Verfahren zum Betreiben eines regenerativen Luftvorwärmers (21), mit einem Rotor (3), mit mindestens einem Rauchgaseintritt (7), mit mindestens einem Rauchgasaustritt (9), mit mindestens einem Lufteintritt (15) und mit mindestens einem Luftaustritt (17), mit folgenden Verfahrensschritten;
Erfassen der Temperatur ($T_{Luft,e}$) der Luft an dem oder den Lufteintritten (15),
Erfassen der Temperatur ($T_{RG,e}$) des Rauchgases an dem oder den Rauchgaseintritten (7) und
Steuern der Temperatur ($T_{Luft,e}$) und/oder des Massenstroms ($\dot{m}_{Luft}$) der Luft an dem oder den Lufteintritten (15) und/oder der Temperatur ($T_{RG,e}$) und/oder des Massenstroms ($\dot{m}_{RG}$) des Rauchgases an dem oder den Rauchgaseintritten (7), so dass die Minimal-Temperatur ($T_{HE,min}$) der Heizbleche eine vorgegebene Mindesttemperatur ($T_{min}$) nicht unterschreitet, **dadurch gekennzeichnet, dass** die Minimaltemperatur ($T_{HE, min}$) der Heizbleche (HE) mit Hilfe der folgenden Näherungsformel berechnet wird

$$T_{HB-KSm} = (T_{Luft,e} + 1,97*(T_{RG,e} + 8K)) / (2,97)$$

mit:

$T_{HB-KSm}$: Mittlere Heizblechtemperatur auf der kalten Seite des Luftvorwärmers
$T_{Luft,e}$: Eintrittstemperatur der Luft
$T_{RG,e}$: Eintrittstemperatur des Rauchgases

2.  Verfahren nach Anspruch 1, **dadurch gekennzeichnet, dass** die Eintrittstemperatur ($T_{Luft,e}$) der Luft durch Rückführen (27) bereits vorgewärmter Luft vom Luftaustritt (17) zum Lufteintritt (15) angehoben wird.

3.  Verfahren nach einem der vorhergehenden Ansprüche, **dadurch gekennzeichnet, dass** der Massenstrom ($\dot{m}_L$) der Luft **dadurch** verringert wird, dass ein Teil der Luft in einem Bypass (29) an dem Luftvorwärmer (21) vorbeigeführt wird.

4.  Computerprogramm, **dadurch gekennzeichnet, dass** es zur Durchführung der Verfahren nach einem der Ansprüche 1 bis 3 geeignet ist.

5.  Luftvorwärmer, mit einem Rotor (3), mit mindestens einem Rauchgaseintritt (7), mit mindestens einem Rauchgasaustritt (9), mit mindestens einem Lufteintritt (15) und mit mindestens einem Luftaustritt (17), mit Einrichtungen zum Erfassen von Temperatur ($T_{Luft,e}$) und Massenstrom ($\dot{m}_{Luft}$) der Luft an dem oder den Lufteintritten (15) sowie von Temperatur ($T_{RG,e}$) und Massestrom ($\dot{m}_{RG}$) des Rauchgases an dem oder den Rauchgaseintritten (7), **dadurch gekennzeichnet, dass** der Luftvorwärmer (21) ein Steuergerät aufweist, und dass das Steuergerät nach einem der Verfahren nach den Ansprüchen 1 bis 3 arbeitet.

6.  Luftvorwärmer nach Anspruch 5, **dadurch gekennzeichnet, dass** er Einrichtungen zum Erfassen von Temperatur ($T_{Luft,e}$) und/oder Massenstrom ($\dot{m}_{Luft}$) der Luft an dem oder den Luftaustritten (17) und/oder zum Erfassen von Temperatur ($T_{RG,e}$) und/oder Massenstrom ($\dot{m}_{RG}$) des Rauchgases an dem oder den Rauchgasaustritten (9) aufweist.

7.  Luftvorwärmer nach Anspruch 5 oder 6, **dadurch gekennzeichnet, dass** er eine Heißluft-Rückführung (27) aufweist, und dass durch die Heißluft-Rückführung (27) ein Teil der vorgewärmten Luft vom Luftaustritt (17) in den Lufteintritt (15) rückführbar ist.

8.  Luftvorwärmer nach einem der Ansprüche 5 bis 7, **dadurch gekennzeichnet, dass** er eine Kaltluft-Umführung (29) aufweist, und dass durch die Kaltluft-Umführung (29) ein Teil der noch nicht vorgewärmten Luft im Bypass an dem Luftvorwärmer (21) vorbei vom Lufteintritt (15) in den Luftaustritt (17) geleitet werden kann.

**Claims**

1.  Method for operating a regenerative air preheater (21), with a rotor (3), with at least one flue-gas inlet (7), with at least one flue-gas outlet (9), with at least one air inlet (15) and with at least one air outlet (17), having the following method steps:

    detection of the temperature ($T_{Air,e}$) of the air at the air inlet or air inlets (15),
    detection of the temperature ($T_{RG,e}$) of the flue gas at the flue-gas inlet or flue-gas inlets (7) and
    control of the temperature ($T_{Air,e}$) and/or of the mass flow ($\dot{m}_{Air}$) of the air at the air inlet or air inlets (15) and/or of the temperature ($T_{RG,e}$) and/or of the mass flow ($\dot{m}_{RG}$) of the flue gas at the flue-gas inlet or flue-gas inlets (7), so that the minimum temperature ($T_{HE, min}$) of the heating plates does not undershoot a predetermined minimum temperature ($T_{min}$),
    **characterized in that**
    the minimum temperature ($T_{HE,min}$) of the heating plates (HE) is calculated with the aid of the following approximation formula

$$T_{HB-KSm} = (T_{Air,e} + 1.97* (T_{RG,e} + 8K)) / (2.97)$$

    with:

    $T_{HB-KSm}$: mean heating-plate temperature on the cold side of the air preheater
    $T_{Air,e}$: inlet temperature of the air
    $T_{RG,e}$: inlet temperature of the flue gas.

2.  Method according to Claim 1, **characterized in that** the inlet temperature ($T_{Air,e}$) of the air is raised by means of the return (27) of already preheated air from the air outlet (17) to the air inlet (15).

3. Method according to one of the preceding claims, **characterized in that** the mass flow ($m_L$) of the air is reduced **in that** part of the air is led past the air preheater (21) in a bypass (29).

4. Computer program, **characterized in that** it is suitable for carrying out the methods according to one of Claims 1 to 3.

5. Air preheater, with a rotor (3), with at least one flue-gas inlet (7), with at least one flue-gas outlet (9), with at least one air inlet (15) and with at least one air outlet (17), with devices for the detection of the temperature ($T_{Air,e}$) and mass flow ($\dot{m}_{Air}$) of the air at the air inlet or air inlets (15) and of the temperature ($T_{RG,e}$) and mass flow ($\dot{m}_{RG}$) of the flue gas at the flue-gas inlet or flue-gas inlets (7), **characterized in that** the air preheater (21) has a control apparatus, and **in that** the control apparatus operates by one of the methods according to Claims 1 to 3.

6. Air preheater according to Claim 5, **characterized in that** it has devices for detection of the temperature ($T_{Air,e}$) and/or mass flow ($\dot{m}_{Air}$) of the air at the air outlet or air outlets (17) and of the temperature ($T_{RG,e}$) and/or for the detection of the temperature ($T_{RG,e}$) and/or mass flow ($\dot{m}_{RG}$) of the flue gas at the flue-gas outlet or flue-gas outlets (9).

7. Air preheater according to Claim 5 or 6, **characterized in that** it has a hot-air return (27), and **in that** part of the preheated air can be returned from the air outlet (17) into the air inlet (15) by the hot-air return (27).

8. Air preheater according to one of Claims 5 to 7, **characterized in that** it has a cold-air diversion (29), and **in that**, by means of the cold-air diversion (29), part of the not yet preheated air can be conducted in the bypass past the air preheater (21) from the air inlet (15) into the air outlet (17).

**Revendications**

1. Procédé de conduite d'un préchauffeur d'air (21) à régénération, qui présente un rotor (3), au moins une entrée (7) de gaz de fumée, au moins une sortie (9) de gaz de fumée, au moins une entrée (15) d'air et au moins une sortie (17) d'air, et qui comprend les étapes de procédé qui consistent à :

saisir la température ($T_{Luft, e}$) de l'air sur la ou les entrées (15) d'air,
saisir la température ($T_{RG, e}$) des gaz de fumée sur la ou les entrées (7) de gaz de fumée et
commander la température ($T_{Luft, e}$) et/ou le débit massique ($m_{Luft}$) de l'air sur la ou les entrées (15) d'air, la température ($T_{RG, e}$) et/ou le débit massique ($m_{RG}$) de gaz de fumée sur la ou les entrées (7) de gaz de fumée de telle sorte que la température minimale ($T_{HE,min}$) de la tôle de chauffage ne descende pas en dessous d'une température minimale prédéterminée ($T_{min}$), **caractérisé en ce que**
la température minimale ($T_{HE, min}$) de la tôle de chauffage (HE) est calculée à l'aide de la formule approchée ci-dessous :

$$T_{HB-KSm} = (T_{Luft, e} + 1{,}97*(T_{RG, e} + 8K))/(2{,}97)$$

dans laquelle

$T_{HB-KSm}$ : représente la température minimale de la tôle de chauffage sur le côté froid du préchauffeur d'air,
$T_{Luft, e}$ : représente la température d'entrée de l'air
$T_{RG, e}$ : représente la température d'entrée des gaz de fumée.

2. Procédé selon la revendication 1, **caractérisé en ce que** la température d'entrée ($T_{Luft, e}$) de l'air est rehaussée par renvoi (27) d'air déjà préchauffé de la sortie (17) d'air à l'entrée (15) d'air.

3. Procédé selon l'une des revendications précédentes, **caractérisé en ce que** l'écoulement massique ($m_L$) de l'air est diminué en faisant passer une partie de l'air dans une dérivation (29) prévue sur le préchauffeur d'air (21).

4. Programme informatique, **caractérisé en ce qu'**il convient pour exécuter le procédé selon l'une des revendications 1 à 3.

5. Préchauffeur d'air doté d'un rotor (3), d'au moins une entrée (7) de gaz de fumée, d'au moins une sortie (9) de gaz de fumée, d'au moins une entrée (15) d'air et d'au moins une sortie (17) d'air ainsi que de dispositifs de saisie de la température ($T_{Luft, e}$) et de l'écoulement massique ($m_{Luft}$) de l'air sur la ou les entrées (15) d'air et de la température ($T_{RG, e}$) et du débit massique ($m_{RG}$) des gaz de fumée sur la ou les entrées (7) de gaz de fumée,
**caractérisé en ce que**
le préchauffeur d'air (21) présente un appareil de commande et **en ce que** l'appareil de commande fonctionne en appliquant l'un des procédés selon les revendications 1 à 3.

6. Préchauffeur d'air selon la revendication 5, **caractérisé en ce qu'**il présente des dispositifs de saisie de la température ($T_{Luft, e}$), de l'écoulement massique ($m_{Luft}$) de l'air sur la ou les sorties (17) d'air et de la température ($T_{RG, e}$) et/ou de saisie de la température ($T_{RG, e}$) et/ou de l'écoulement massique ($m_{RG}$) des gaz de fumée sur la ou les sorties (9) de gaz de fumée.

7. Préchauffeur d'air selon les revendications 5 ou 6, **caractérisé en ce qu'**il présente un renvoi (27) d'air chaud et **en ce qu'**une partie de l'air préchauffé peut être renvoyée de la sortie (17) d'air à l'entrée (15) d'air par le renvoi (27) d'air chaud.

8. Préchauffeur d'air selon l'une des revendications 5 à 7, **caractérisé en ce qu'**il présente un contournement (29) d'air froid et **en ce que** le contournement (29) d'air froid permet de conduire une partie de l'air qui n'a pas encore été préchauffé de l'entrée (15) d'air à la sortie (17) d'air par la dérivation prévue dans le préchauffeur d'air (21).

Fig. 1

Fig. 2

Fig. 3

Fig. 4

EP 1 987 307 B1

Fig. 5

RG

Luft

Luft

RG

RG

21

21

29

27

27

RG

Luft

RG

FL 1

FL 2

Luft

23        25

25        23

EP 1 987 307 B1

13

**EP 1 987 307 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2320911 A